# EUROPEAN PATENT APPLICATION

(11) **EP 4 682 694 A1**
(43) Date of publication of application: **21.01.2026**
(21) Application number: 24919144.6
(22) Date of filing: 30.12.2024
(51) Int. Cl.: G06F 3/04815, G06F 3/01, G06T 19/00, G06T 19/20, G06T 13/40

(54) **USER INTERFACE GENERATION METHOD AND METHOD FOR CONTROLLING AVATAR MOTION BY MEANS OF USER INTERFACE**

(30) Priority: 28.05.2024 CN 202410673994
(71) Applicant: Nanchang Virtual Reality Research Institute Co., Ltd., Nanchang, Jiangxi 330000 (CN)
(72) Inventor: LUO, Zhiping, Nanchang, Jiangxi 330000 (CN); ZHOU, Jianguo, Nanchang, Jiangxi 330000 (CN)
(74) Representative: Metida
(86) International application number: PCT/CN2024/143794
(87) International publication number: WO 2025/246350

(57) **Abstract**

The present application provides a method for generating a user interface and a method for controlling avatar movement through a user interface. An overhead view, a navigation mesh map and a local environment map that are generated and a main view constitute the user interface. Controlling avatars through the user interface allows users to control the avatars intuitively and immersively while allowing operators to control the freedom of limb movements of the avatars.

## Description

### TECHNICAL FIELD

The present application pertains to the technical field of avatar movement control in a virtual space, and particularly relates to a method for generating a user interface and a method for controlling avatar movement through a user interface.

### BACKGROUND

In the prior art, avatars in a virtual space are controlled through the following methods: Solution 1: A 3D keyboard or a virtual keyboard is created by combining interactive control components and control components. Keyboard keys are recognized as clickable buttons and correspond to physical keyboard keys or mouse clicks. Trigger event scripts for the buttons execute actions or animations that avatars should perform after the buttons are clicked, where such animations are preset animations made by animators in advance, for example, game events such as opening a door or moving forward. Thus, users can control avatar movement in the virtual space by manipulating the interactive components.

Solution 2: A limb animation driving method is used. Through artificial intelligence technology, limb postures are recognized from full-body video of a user captured by visual sensors and mapped to a virtual skeleton of an avatar, thereby driving the movement of the avatar.

The existing solution 1 is a common method for controlling interactions between users and game characters in games. This method is also applied in mainstream metaverse spaces at present. A significant drawback of this solution is that users need to repeatedly press keys, click the mouse, or tap virtual buttons to control local movements of avatars. It is difficult for most users to memorize the terrain and destination distribution of a large-scale metaverse space. Therefore, avatar movement control becomes tedious and monotonous.

The existing solution 2 is commonly applied to the control of limb movements of virtual characters in small-scale virtual scenarios, for example, the control of limb movements of real persons simulated by virtual characters under the drive of real persons in live streaming applications. This solution can also be applied to user-controlled avatar movements in metaverse spaces. However, this solution has significant drawbacks. One drawback is that this solution is not applicable to mobile terminals, where built-in visual sensors of the mobile terminals require users to stand at a certain distance to capture full-body video for limb posture recognition, but mobile terminals, especially smartphones, are the most common hardware equipment for accessing metaverse spaces, so this solution limits the popularization of such applications. Another drawback is that the real-person-driven method offers high freedom of avatar movement (fully simulating the real limb movements of the users), but poses challenges for metaverse space operators. For example, the operators cannot limit some limb movements of the avatar.

To provide a method that allows users to control avatars intuitively and immersively while allowing operators to control the freedom of limb movements of the avatars, a new solution needs to be proposed.

### SUMMARY

To address or mitigate the issues in the prior art, the technical solution provided by the present application allows users to control avatars intuitively and immersively while allowing operators to control the freedom of limb movements of user avatars.

According to a first aspect, an embodiment of the present application provides a method for generating a user interface, the user interface including a main view, an overhead view, a navigation mesh map, and a local environment map, where the method includes:
adding a first virtual camera to a virtual space, scaling all virtual objects in the virtual space until the virtual space is displayed in a camera view of the first virtual camera, and determining the overhead view based on the view obtained by the first virtual camera;
voxelizing the entire virtual space, calculating a plurality of walkable regions and a plurality of non-walkable regions for all avatars, treating each of the non-walkable regions as an obstacle object, determining edges of the walkable regions and collecting edge points on the edges, connecting all the edge points to generate a polygonal mesh, determining a mesh map based on the polygonal mesh, adding positions of all avatars in the virtual space to the mesh map, and displaying the positions as first dots to obtain the navigation mesh map;
adding a second virtual camera to the virtual space, binding the second virtual camera to each of the avatars so that the second virtual camera moves with the walking of the avatar, with the second virtual camera placed behind the avatar, and determining the local environment map based on a view of the second virtual camera; and
updating the overhead view, the navigation mesh map, and the local environment map based on changes in the positions of the avatars in the virtual space.

In a preferred embodiment of the present application, the updating the navigation mesh map based on changes in the positions of the avatars in the virtual space includes:
adding a third virtual camera to the virtual space, rendering the virtual space in a real-time manner under a view of the third virtual camera, and updating the view of the first virtual camera based on changes in the virtual space to update the overhead view; and
updating the navigation mesh map based on the update of the overhead view.

In a preferred embodiment of the present application, the updating the navigation mesh map based on the update of the overhead view includes:
determining a view of the avatar in the first virtual camera when the position of the avatar in the virtual space changes; and
projecting the avatar position change onto the navigation mesh map according to a perspective relationship of the first virtual camera, and overlaying a corresponding second dot on the navigation mesh map, the second dot representing an updated position of the avatar.

In a preferred embodiment of the present application, the updating the navigation mesh map based on the update of the overhead view further includes:
selecting a region in the overhead view for magnification, synchronizing content of the region to the local environment map, and highlighting the region in the navigation mesh map.

Compared with the prior art, the embodiment of the present application provides a method for generating a user interface for controlling avatar movement in a metaverse virtual space. An overhead view, a navigation mesh map, a local environment map that are generated, and a main view constitute the user interface. Controlling avatars through the user interface allows the users to control the avatars intuitively and immersively while allowing operators to control the freedom of limb movements of user avatars.

According to a second aspect, an embodiment of the present application further provides a method for controlling avatar movement through a user interface, where the user interface is generated by the method described in the first aspect. The method specifically includes:
acquiring a destination determined by a user on the overhead view or the navigation mesh map for an avatar to move toward;
determining a route for the avatar to walk based on a pathfinding algorithm of the navigation mesh map, and controlling the avatar to move toward the destination;
acquiring an instruction from the user to click any one of the overhead view, a global navigation map, and the local environment map; and
setting a virtual camera corresponding to the map clicked by the user as an active camera of the main view to display a view corresponding to a position of the avatar displayed in the clicked map in the main view.

In a preferred embodiment of the present application, the method further includes:
acquiring an avatar of interest selected by the user in the local environment map, and entering a chat mode.

In a preferred embodiment of the present application, the method further includes:
adding a fourth virtual camera to the virtual space, placing the fourth virtual camera directly in front of the face of the avatar, and displaying the face of the avatar in an isometric view; and
adding a floating view window to render an avatar face image in a real-time manner in a view of the fourth virtual camera, where the floating view window is located below the main view.

In a preferred embodiment of the present application, the method further includes:
acquiring, in the chat mode, an instruction from the user to drive a facial expression of the avatar through a facial expression driving method; and
controlling the avatar to make a corresponding facial expression based on the instruction for driving the facial expression.

In a preferred embodiment of the present application, the method further includes:
acquiring chat content between the user and the avatar;
determining limb movements of the avatar based on the chat content; and
controlling the avatar to make corresponding limb movements based on the determined limb movements of the avatar.

Compared with the prior art, the embodiment of the present application provides a method for controlling avatars through a user interface, allowing a user interface mode for avatars to enter a chat dialogue mode and a user interface mode for avatar movement under global path planning to switch to a user interface mode for user-controlled avatar movement in a local environment. Thus, the user interface provided by the present application allows users to control avatars intuitively and immersively while allowing operators to control the freedom of limb movements of user avatars.

### BRIEF DESCRIPTION OF DRAWINGS

The drawings described herein are provided to further understand the present application and form a part of the present application. The illustrative embodiments and descriptions thereof in the present application are used to explain the present application and do not constitute an improper limitation of the present application. The following will describe some specific embodiments of the present application in detail in an exemplary but non-limiting manner with reference to the drawings. The same reference signs in the drawings denote the same or similar components or parts, and persons skilled in the art should understand that these drawings are not necessarily drawn to scale. In the drawings:
FIG. 1 is a flowchart of a method for generating a user interface for controlling avatar movement in a metaverse virtual space according to an embodiment of the present application;

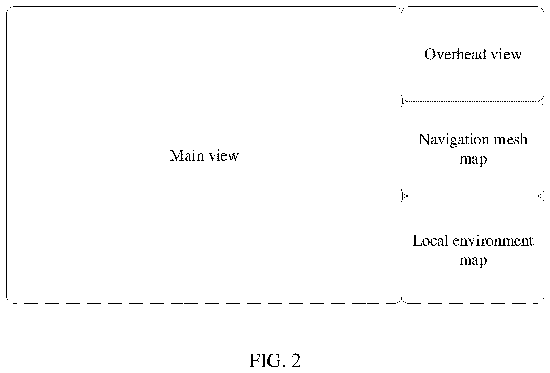

FIG. 2 is a schematic diagram of layout of a user interface according to an embodiment of the present application;
FIG. 3 is a schematic diagram of layout of a user interface for communication of avatars in a local environment map according to an embodiment of the present application; and
FIG. 4 is a schematic diagram of layout of a user interface for magnifying a selected region in a local environment map according to an embodiment of the present application.

### DESCRIPTION OF EMBODIMENTS

To enable persons skilled in the art to better understand the solutions of the present application, the technical solutions in the embodiments of the present application will be described clearly and thoroughly below with reference to the drawings in the embodiments of the present application. Apparently, the described embodiments are only some rather than all of the embodiments of the present application. Based on the embodiments in the present application, all other embodiments obtained by persons of ordinary skill in the art without creative efforts shall fall within the protection scope of the present application.

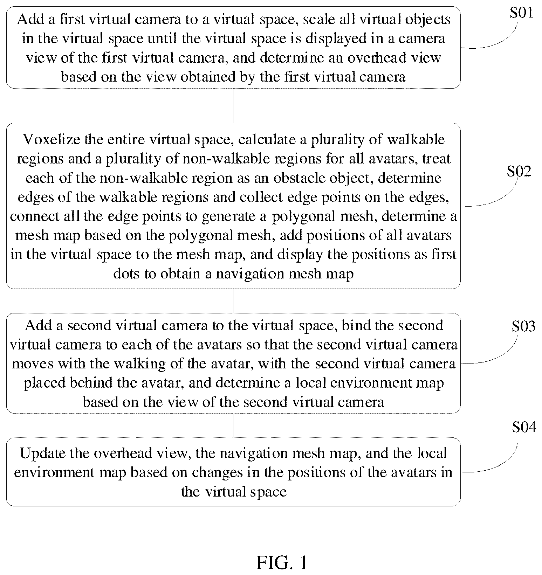

According to a first aspect, as shown in FIG. 1, an embodiment of the present application provides a method for generating a user interface for controlling avatar movement in a metaverse virtual space, the user interface including a main view, an overhead view, a navigation mesh map, and a local environment map, where the method includes the following steps.

Step S01: Add a first virtual camera to the virtual space, scale all virtual objects in the virtual space until the virtual space is displayed in a camera view of the first virtual camera, and determine the overhead view based on the view obtained by the first virtual camera.

Specifically, the user interface provided by the embodiment of the present application includes: a main view, an overhead view, a navigation mesh map, and a local environment map. The main view represents the metaverse space. Three layered small maps are arranged in a sidebar container and can be hidden or displayed by clicking a button. Users can switch to display modes of different metaverse spaces in the main view by clicking the small maps while still easily viewing the display of the metaverse spaces in other views synchronously in the sidebar.

In this step, the generated overhead view is mainly used for route following. First, the first virtual camera is added to the virtual space and typically positioned directly above the virtual space, looking downward and displaying the virtual space scene content in an isometric view. The length and width of the view of the first virtual camera are consistent with the length and width of an image displayed in a main view window. Since the virtual space is large, to display the entire scene in the view of the first virtual camera, all objects in the entire virtual space are scaled first. Specifically, an empty object is created first, the empty object is set as a parent object of all other objects, and the empty object is scaled until the entire virtual space is displayed in the view of the first virtual camera. Finally, a parent-child relationship between all objects and the empty object is cancelled.

Step S02: Voxelize the entire virtual space, calculate a plurality of walkable regions and a plurality of non-walkable regions for all avatars, treat each of the non-walkable regions as an obstacle object, determine edges of the walkable regions and collect edge points on the edges, connect all the edge points to generate a polygonal mesh, determine a mesh map based on the polygonal mesh, add positions of all avatars in the virtual space to the mesh map, and display the positions as first dots to obtain the navigation mesh map.

In this step, the navigation mesh map is generated for global planning. A navigation mesh can be generated to achieve a polygonal mesh for marking walkable regions in the virtual space. The mesh can be generated using a classic remeshing method in navigation. The remeshing method does not fall within the protection scope of the present application and thus is not described in detail. The method mainly involves voxelizing the virtual space, that is, generating small cubes, then calculating flat regions in the voxel space sufficient to support the walking of the avatars, and generating edges for each flat region, with non-walkable regions treated as obstacle objects. Edge points of the flat regions are sampled, and these edge points are connected to generate a polygonal mesh. All avatars in the virtual space are treated as proxy objects, and for ease of display, geometric shapes of the proxy objects are represented as dots. Thus, the positions of all avatars in the virtual space are displayed as dots on the navigation mesh map. Finally, the navigation mesh and the proxy objects are displayed in the overhead view determined based on the camera view in Step S01.

Step S03: Add a second virtual camera to the virtual space, bind the second virtual camera to each of the avatars so that the second virtual camera moves with the walking of the avatar, with the second virtual camera placed behind the avatar, and determine the local environment map based on a view of the second virtual camera.

In this step, the local environment map is generated for local movement and animation. A second virtual camera is added, and the second virtual camera is bound to an avatar object, so the camera moves with the walking of the avatar. A position offset is set between the second virtual camera and the avatar, so that the second virtual camera is placed behind the avatar, and the virtual space content is displayed in a perspective view. The length and width of the view of the second virtual camera are consistent with the length and width of an image displayed in a main view window. The translation, rotation, and scaling of the second virtual camera can be adjusted manually or via code scripts, so that the view of the second virtual camera covers at least the entire body of the avatar.

Step S04: Update the overhead view, the navigation mesh map, and the local environment map based on changes in the positions of the avatars in the virtual space.

In this step, the updating the navigation mesh map based on changes in the positions of the avatars in the virtual space includes:
adding a third virtual camera to the virtual space, rendering the virtual space in a real-time manner under a view of the third virtual camera, and updating the view of the first virtual camera based on changes in the virtual space to update the overhead view; and
updating the navigation mesh map based on the update of the overhead view.

Specifically, in the present application, a method for dynamically adding a virtual camera is mainly used to render the virtual scene in a real-time manner under the perspective of the newly added virtual camera, thereby displaying images in the local environment map, dynamically overlaying game objects, and projecting the game objects onto the first virtual camera to update the navigation mesh map.

In an embodiment of the present application, the updating the navigation mesh map based on the update of the overhead view includes:
determining a view of the avatar in the first virtual camera when the position of the avatar in the virtual space changes; and
projecting the avatar position change onto the navigation mesh map according to a perspective relationship of the first virtual camera, and overlaying a corresponding second dot on the navigation mesh map, the second dot representing an updated position of the avatar.

Specifically, changes generated by user interactions on the local environment map, such as controlling the walking of the avatar, need to be synchronized to the navigation mesh map. The avatar with the updated position is projected onto the navigation mesh map according to the perspective relationship of the first virtual camera, and a dot is overlaid to highlight the avatar.

In an embodiment of the present application, the updating the navigation mesh map based on the update of the overhead view further includes:
selecting a region in the overhead view for magnification, synchronizing content of the region to the local environment map, and highlighting the region in the navigation mesh map.

Specifically, when a region is selected in the overhead view for magnification, the content of the magnified region needs to be synchronized to the local environment map, and the selected region is highlighted in the navigation mesh map. If new small maps are dynamically generated at a frame rate, computational and network loads are significantly increased. The specific steps are as follows: adding a third virtual camera, and placing the third virtual camera directly above the selected region, where the length and width of the view are consistent with the length and width of an image displayed in the main view. Assuming that the virtual space coordinate system has the Y-axis pointing upward and a ratio of the size of the selected region to the size of the view of the newly added third virtual camera is m, the position directly above is the center point of the selected region in the XY plane, and the Z-axis position is the Z-axis position of the first virtual camera multiplied by m. Since the size of the selected region is smaller than the size of the view of the newly added third virtual camera, the Z-axis position of the newly added third virtual camera is smaller than the Z-axis position of the first virtual camera. Thus, the newly added third virtual camera is closer to the scene content to be displayed, achieving a magnified display effect.

Compared with the prior art, the embodiment of the present application provides a method for generating a user interface for controlling avatar movement in a metaverse virtual space. An overhead view, a navigation mesh map, a local environment map that are generated, and a main view constitute the user interface. Controlling avatars through the user interface allows the users to control the avatars intuitively and immersively while allowing operators to control the freedom of limb movements of user avatars.

According to a second aspect, an embodiment of the present application further provides a user interface including: a main view, an overhead view, a global navigation map, and a local environment map, where
the main view is used for displaying a virtual space shown in the overhead view, the global navigation map, or the local environment map.

Compared with the prior art, the beneficial effects of the user interface provided by the embodiment of the present application are the same as those of the first aspect and are not repeated here.

According to a third aspect, an embodiment of the present application further provides a method for controlling avatar movement through a user interface. The method includes:
acquiring a destination determined by a user on the overhead view or the navigation mesh map for an avatar to move toward;
determining a route for the avatar to walk based on a pathfinding algorithm of the navigation mesh map, and controlling the avatar to move toward the destination;
acquiring an instruction from the user to click any one of the overhead view, the global navigation map, and the local environment map; and
setting a virtual camera corresponding to the map clicked by the user as an active camera of the main view to display a view corresponding to a position of the avatar displayed in the clicked map in the main view.

In a preferred embodiment of the present application, the method further includes:
acquiring an avatar of interest selected by the user in the local environment map, and entering a chat mode.

In a preferred embodiment of the present application, the method further includes:
adding a fourth virtual camera to the virtual space, placing the fourth virtual camera directly in front of the face of the avatar, and displaying the face of the avatar in an isometric view; and
adding a floating view window to render an avatar face image in a real-time manner in a view of the fourth virtual camera, where the floating view window is located below the main view.

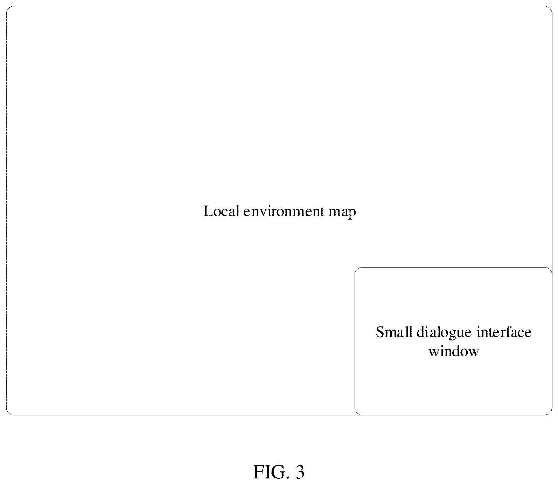

Specifically, as shown in FIG. 3, when switching to the local environment map, avatars can communicate and make dialogues with each other, a small dialogue interface window is displayed in the bottom right corner of the local environment map, and the faces of the avatars are displayed in the small dialogue interface window.

In a preferred embodiment of the present application, the method further includes:
acquiring, in the chat mode, an instruction from the user to drive a facial expression of the avatar through a facial expression driving method; and
controlling the avatar to make a corresponding facial expression based on the instruction for driving the facial expression.

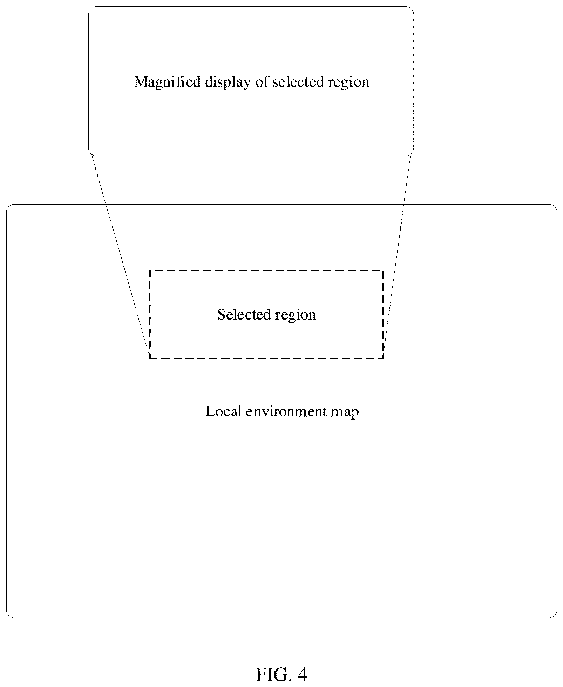

Specifically, as shown in FIG. 4, if the user selects a local region in a selected space on an interface of the local environment map, the content displayed in a selected window is magnified and displayed in a pop-up view window.

In a preferred embodiment of the present application, the method further includes:
acquiring chat content between the user and the avatar;
determining limb movements of the avatar based on the chat content; and
controlling the avatar to make corresponding limb movements based on the determined limb movements of the avatar.

A user interaction process on the user interface provided by the embodiment of the present application is specifically described as follows.

After a user enters a main view, the user clicks an interface button to expand a sidebar container, and three small maps (including an overhead view, a navigation mesh map, and a local environment map) are displayed. The user can click a button to hide the container. One of the small maps is clicked, a system sets a main view active camera as a virtual camera corresponding to the small map, and a virtual space under an updated active camera is displayed in a main view window. If a small navigation map is selected, the navigation mesh map is displayed.

The user can select a destination for an avatar to move toward in two methods. One method is to determine the destination for the avatar to move toward on the navigation mesh map (typically visualized with a specific color); and the other method is to select a region on the overhead view to magnify and check whether the region is a destination of interest, such as a local environment, or check whether the user is interested in an avatar in the region. The first method typically occurs when the user is familiar with the virtual space and understands or knows the destination. The second method typically occurs when the user is still exploring the virtual space without a clear destination. After the destination is selected, the avatar enters a route-following mode, and moves toward the destination based on a pathfinding algorithm of the navigation mesh map in accordance with walking animations.

The user clicks the local environment map, and the main view active camera is updated to the virtual camera of the local environment map, so that a virtual space under the perspective of a new active camera is displayed in the main view window. In this view, the user can finely control movements of an avatar, including keyboard instructions, but not limited thereto. Other multimodal-driven artificial intelligence algorithms such as driving limb movements of the avatar through voice can also be used. Thus, the avatar can perform rich personalized walking or other limb animations under the control of the user.

In the local environment map, the user can chat with nearby avatars within the view range. The user selects an avatar of interest. The selection methods can be implemented by clicking the avatar, but are not limited thereto. Other interaction methods such as specific gestures or specific voices can also be used for entering a chat mode. A new virtual camera is added and placed directly in front of the face of the avatar, and the face of the avatar is displayed in an isometric view. A floating view window is added to display an avatar face image rendered in a real-time manner under the perspective of the newly added camera, and a floating window is located in the bottom right corner of the main view.

In the chat mode of the user interface provided by the embodiment of the present application, not limited to controlling limb movements of the avatar, the user can improve the immersive chat experience through facial expression driving methods such as a method for driving a facial expression through video and a method for driving a facial expression through voice. Based on the chat content, the avatar performs corresponding limb animations. The animations may be pre-set animations, but are not limited thereto, and may alternatively be voice-driven limb animations implemented by artificial intelligence algorithms.

Compared with the prior art, the embodiment of the present application provides a method for controlling avatars through a user interface, allowing a user interface mode for avatars to enter a chat dialogue mode and a user interface mode for avatar movement under global path planning to switch to a user interface mode for user-controlled avatar movement in a local environment. Thus, the user interface provided by the present application allows users to control avatars intuitively and immersively while allowing operators to control the freedom of limb movements of user avatars.

In conclusion, it should be noted that the above embodiments are merely intended for describing the technical solutions of the present application but not for limiting the present application. Although the present application is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of the present application. All such modifications and equivalent replacements shall fall within the scope of the claims and specification of the present application.

## Claims

1. A method for generating a user interface, the user interface comprising a main view, an overhead view, a navigation mesh map, and a local environment map, wherein the method comprises:
adding a first virtual camera to a virtual space, scaling all virtual objects in the virtual space until the virtual space is displayed in a camera view of the first virtual camera, and determining the overhead view based on the view obtained by the first virtual camera;
voxelizing the entire virtual space, calculating a plurality of walkable regions and a plurality of non-walkable regions for all avatars, treating each of the non-walkable regions as an obstacle object, determining edges of the walkable regions and collecting edge points on the edges, connecting all the edge points to generate a polygonal mesh, determining a mesh map based on the polygonal mesh, adding positions of all avatars in the virtual space to the mesh map, and displaying the positions as first dots to obtain the navigation mesh map;
adding a second virtual camera to the virtual space, binding the second virtual camera to each of the avatars so that the second virtual camera moves with the walking of the avatar, with the second virtual camera placed behind the avatar, and determining the local environment map based on a view of the second virtual camera; and
updating the overhead view, the navigation mesh map, and the local environment map based on changes in the positions of the avatars in the virtual space.

2. The method for generating a user interface according to claim 1, wherein the updating the navigation mesh map based on changes in the positions of the avatars in the virtual space comprises:
adding a third virtual camera to the virtual space, rendering the virtual space in a real-time manner under a view of the third virtual camera, and updating the view of the first virtual camera based on changes in the virtual space to update the overhead view; and
updating the navigation mesh map based on the update of the overhead view.

3. The method for generating a user interface according to claim 2, wherein the updating the navigation mesh map based on the update of the overhead view comprises:
determining a view of the avatar in the first virtual camera when the position of the avatar in the virtual space changes; and
projecting the avatar position change onto the navigation mesh map according to a perspective relationship of the first virtual camera, and overlaying a corresponding second dot on the navigation mesh map, the second dot representing an updated position of the avatar.

4. The method for generating a user interface according to claim 2, wherein the updating the navigation mesh map based on the update of the overhead view further comprises:
selecting a region in the overhead view for magnification, synchronizing content of the region to the local environment map, and highlighting the region in the navigation mesh map.

5. A method for controlling avatar movement through a user interface, wherein the user interface is generated by the method according to any one of claims 1 to 4; and the method specifically comprises:
acquiring a destination determined by a user on the overhead view or the navigation mesh map for an avatar to move toward;
determining a route for the avatar to walk based on a pathfinding algorithm of the navigation mesh map, and controlling the avatar to move toward the destination;
acquiring an instruction from the user to click any one of the overhead view, a global navigation map, and the local environment map; and
setting a virtual camera corresponding to the map clicked by the user as an active camera of the main view to display a view corresponding to a position of the avatar displayed in the clicked map in the main view.

6. The method for controlling avatar movement through a user interface according to claim 5, wherein the method further comprises:
acquiring an avatar of interest selected by the user in the local environment map, and entering a chat mode.

7. The method for controlling avatar movement through a user interface according to claim 6, wherein the method further comprises:
adding a fourth virtual camera to the virtual space, placing the fourth virtual camera directly in front of the face of the avatar, and displaying the face of the avatar in an isometric view; and
adding a floating view window to render an avatar face image in a real-time manner in a view of the fourth virtual camera, wherein the floating view window is located below the main view.

8. The method for controlling avatar movement through a user interface according to claim 6, wherein the method further comprises:
acquiring, in the chat mode, an instruction from the user to drive a facial expression of the avatar through a facial expression driving method; and
controlling the avatar to make a corresponding facial expression based on the instruction for driving the facial expression.

9. The method for controlling avatar movement through a user interface according to claim 8, wherein the method further comprises:
acquiring chat content between the user and the avatar;
determining limb movements of the avatar based on the chat content; and
controlling the avatar to make corresponding limb movements based on the determined limb movements of the avatar.
